# EUROPÄISCHE PATENTSCHRIFT

(11) **EP 2 337 382 B1**
(45) Veröffentlichungstag und Bekanntmachung des Hinweises auf die Patenterteilung: **08.02.2012**
(21) Anmeldenummer: 09179727.4
(22) Anmeldetag: 17.12.2009
(51) Int. Cl.: H04W 4/08

(54) **Verfahren und Vorrichtung zur Bildung von Ad-Hoc-Nutzergruppen einzelner Mobilfunkteilnehmer**
Method and device for forming ad-hoc user groups of individual mobile phone users
Procédé et dispositif de formation de groupes ad-hoc d'utilisateurs de téléphone mobile isolés

(43) Veröffentlichungstag der Anmeldung: 22.06.2011
(73) Patentinhaber: Deutsche Telekom AG, 53113 Bonn (DE)
(72) Erfinder: Kirchherr, Ralf, 63225, Langen (DE)
(74) Vertreter: 2K Patentanwälte Blasberg Kewitz & Reichel

(56) Entgegenhaltungen:
- WO-A1-2008/100015
- DE-A1-102004 022 562
- US-A1- 2009 061 825
- US-A1- 2009 202 060

## Beschreibung

Die Erfindung betrifft ein Verfahren sowie einen Server zum Bestimmen einer Ad-hoc Nutzergruppe, deren Mitglieder jeweils mindestens ein mobiles Endgerät mit Spracheingabemitteln zur Kommunikation verwenden.

### Hintergrund der Erfindung

Die Bedeutung mobiler Endgeräte (z.B. Mobilfunkgeräte) für die persönliche Kommunikation nimmt immer mehr zu. Dabei werden diese Geräte nicht nur für die direkte Kommunikation mit räumlich entfernten Teilnehmern verwendet, vielmehr wächst die Bedeutung dieser Endgeräte auch als mobiler Musikplayer. Fotoalbum und persönliches Adrensbuch.

Persönliche Inhalte und Daten wie Musik, Fotos, Videos und Adressen werden dabei oft auch gerne in persönlicher Gegenwart anderer Nutzer ausgetauscht. Darüber hinaus besteht oft auch der Wunsch nicht nur Inhalte auszutauschen, die lokal auf einem mobilen Endgerät gespeichert sind, sondern auch Inhalte, die zentral im Netz gespeichert sind (z.B. persönliches Medien-Center o.ä.).

Der Austausch beliebiger Inhalte wird dabei auch oft unter mehreren Nutzern gleichzeitig gewünscht (Beispiel: Eine Gruppe jugendlicher Nutzer lernt sich im Urlaub kennen und möchte nun reihum die Kontaktdaten tauschen, um künftig in Kontakt zu bleiben).

Bislang findet der Austausch dieser Inhalte weitgehend über die Funkschnittstelle beispielsweise in Form einer SMS oder MMS o.a. statt, selbst wenn die beteiligten Nutzer, zwischen dienen die Inhalte ausgetauscht werden sollen, sich direkt gegenüber stehen, da andere Möglichkeiten des Datenaustausches spezielle Kabel-, Funk- oder Infrarot-Verbindungen erfordern, die zudem oftmals nicht endgeräteübergreitend funktionieren. Um die Informationen an alle Empfänger senden zu können, müssen die Empfangsadressen (Telefonnummern) aller Beteiligten für gewöhnlich einzeln manuell ausgewählt und oder Empfängerlisten erstellt werden. Die Teilnehmer, unter denen die Inhalte meist spontan ausgetauscht werden sollen, bilden damit eine Art Ad-Hoc-Nutzergruppe, die sich dadurch auszeichnen, dass eine nicht schon im Vorfeld in irgendeiner Art und Weise als geschlossene Nutzergruppe angelegt wurde.

An diesen Punkt setzt die Erfindung an, indem ein Verfahren beschrieben wird, mit dessen Hilfe sich mit wenigen Schritten solche Ad-hoc-Nutzergruppen für vielhältige Dienste administrieren lassen, die dazu genutzt werden können, beliebige Inhalte und Daten zwischen den Teilnehmern der Ad-hoc-Nutzergruppe auszutauschen.

Zur Zeit sind nur Verfahren bekannt, die eine Identifizierung zweier(!) einzelner Mobilfunkgeräte erlauben, indem beide Geräte kurz aneinander gestoßen werden, so dass der Zeitpunkt des Impulses des Zusammenstoßes von den integrierten Bcschleunigungeaensoren der Geräte registriert und als Unterscheidungskriterium herangezogen werden kann, um die beiden beteiligten Mobilfunkgeräte zu identifizieren (Applikation 'Bump' für iPhone ). Das vorliegende Verfahren geht darüber hinaus, indem es zum einen die Zuordnung von mehr als zwei Mobilfunkgeräten erlaubt und zum anderen keine zusätzliche spezielle Software auf der Endgeräteseite benötigt (die Sprachsignale können auch über eine normale Telefonverbindung übertragen werden).

Aus US 2009/061825 A1 ist ein "Group Message Server" bekannt, der nach Empfang einer Nachricht, welche einen "group message indicator" und Identifizierungsinformationen der teilnehmenden Mobilfunkendgeräte (=Nutzer) enthält, eine Nutzergruppe zum Austausch von Nachrichten innerhalb der Gruppe bildet.

WO 2008/100015 A1 offenbart ein Verfahren zum Aufbau einer Nutzergruppe durch einen Server. Der Server überwacht Kommunikationsverbindungen zwischen Mobilfunkendgeräten und erhält dabei "traffic statistics" sowie "call contents". Aufgrund dieser enthaltenen Informationen ermittelt der Server Nutzer, die eine Beziehung zueinander haben und bildet eine Gruppenbeziehung.

### Überblick über die Erfindung

Aufgabe der Erfindung ist ein Verfahren und einen Server bereitzustellen, die eine schnelle Definition einer Nutzergruppe erlaubt.

Gelöst wird diese Aufgabe durch eine Erfindung mit den Merkmalen der unabhängigen Ansprüche.

Neben dem Verfahren, das zu einem Großteil auf einem Server abläuft, weist die Erfindung einen zentralen Server zum Bestimmen einer Ad-hoc Nutzergruppe auf, deren Mitglieder jeweils mindestens ein mobiles Endgerät mit Spracheingabemitteln zur Kommunikation verwenden. Hierbei handelt es sich vorzugsweise um einen Computer mit CPU und Arbeitsspeicher sowie einem Festplattensystem, der entsprechend programmiert ist. Dieser weist eine Schnittstelle für die Kommunikation mit den mobilen Endgeräten auf, die einen jeweiligen Verbindungeaufbau aller mobilen Endgeräte erlaubt. Diese Schnittstelle kann eine GSM, UMTS, PTSN, eine ISDN etc. und/oder eine IP-Verbindung ermöglichen. EG kann sich somit um eine entsprechende Netzwerkkarte handeln, die im Server verbaut ist. Ferner weist der Server eine Sprachempfangseinheit zum Empfangen einer Sprachnachricht von den mobilen Endgeräten auf. Diese Empfangseinheit ist vorzugsweise ein Softwaremodul, das auf dem Server arbeitet. Die Verarbeitungseinheit zum Analysieren der Sprachnachrichten ist ebenfalls ein Softwaremodul, das auf dem Prozessor des Rechners abläuft, um Übereinstimmungen bei den jeweils übermittelten Sprachnachrichten zu erkennen, und wenn eine Übereinstimmung festgestellt wurde, erfolgt eine Zuordnung der mobilen Endgeräte zu einer Ad-hoc-Nutzergruppe und es wird eine Gruppenkennung an die mobilen Endgeräte übermittelt.

Über eine zentrale Service-Nummer (Telefonnummer) wird der Server kontaktiert. Im Zuge der VoiP-Technologie, kann auch eine Internet-Adresse verwendet werden oder andere Adressierungstechniken

Ferner ist ein Sprachdialogsystem vorhanden, das vorzugsweise mit einer automatische Spracherkennung und/oder Sprechererkennung arbeitet, um Übereinstimmungen bei der Eingabe der Mobiltunkgeräte zu bestimmen. Das Sprachdialogsystem arbeitet vorzugsweise als Softwaremodul auf einem Prozessor. Ferner werden zeitliche Übereinstimmungen des Sprachkommandos bei der Bestimmung einer Ad-Hoc-Nutzergruppe berücksichtigt. Sollte dieselbe Nachricht innerhalb eines sehr kleinen Zeitfensters eintreffen, so ist die Zugehörigkeit zu der gleichen Gruppe wahrscheinlich. Je näher die Nachrichten beieinander liegen, desto größer ist die Wahrscheinlichkeit der Gruppenzugehörigkeit.

Ferner-weist der Server eine Übermittlungseinheit auf, die als Netzwerkanschluss ausgebindet sein kann, die den einzelnen Endgeräten Informationen übermittelt, die einen Austausch von Informationen mit den Endgeräten der Ad-hoc Nutzergruppe erlauben. Ein Prozessor hat die Telefonkennungen der mobilen Endgeräte beim Anruf erfasst und diese gespeichert. Nun kann über diese Kennung die Gruppeninformation übertragen werden. Die Übermittlungseinheit sendet z.B. an jedes Endgerät eine MMS/SMS.

Die Erfindung beschreibt ein Verfahren, bei dem die beteiligten Endgerate, zwischen denen Inhalte (Fotos. Musik, Videos, Adressen, etc.) ausgetauscht werden sollen, einfach und sicher identifiziert werden, indem ein Sprachkommando verwendet wird, das von allen beteiligten Endgeräten empfangen und als Identifizierungemerkmal für die beteiligten Endgeräte verwendet wird. Das Verfahren erlaubt so die schnelle Identifizierung der Teilnehmer einer Ad-hoc-Nutzergruppe, zwischen denen beliebige Inhalte ausgetauscht werden sollen. Eine solche Ad-hoc-Nutzergruppe könnte beispielsweise durch Gäste einer Party gebildet werden, die die Fotos des Abends untereinander austauschen wollen.

In der einfachsten Form funktioniert das Verfahren so, dass alle Mobilfunkgeräte eine zentrale Service-Nummer eines Zugangs-Servers wählen, der an ein Sprachdialogsystem gekoppelt ist, das mit einer automatischen Spracherkennungs-Software (ARS = Automatic Speech Recognition) versehen ist. Mögliche Verfahren sind Hidden-Markov-Modelle, neuronale Netze in Kombination mit Sprachmodellen. Andere Verfahren, sind denkbar. Wenn sich die beteiligten Endgeräte in unmittelbarer Nähe befinden, wird über die einzelnen Sprachtelefonieverbindungen das gleiche akustische Umgebungsgeräusch an den zentralen Zugangs-Server übertragen. In dieser Situation können nun die beteiligten Endgeräte mittels eines entsprechenden Sprachsignals identifiziert werden, da der zentrale Zugangs-Server nur von den in direkter räumlicher Nähe befindlichen Endgeräten ein nahezu identisches Audiosignal empfängt.

Die vom Zugangs-Server empfangenen Audiosignale anderer Nutzer, die möglicherweise zeitgleich den Dienst mit anderen Endgeräten nutzen, unterscheiden sich hierbei wesentlich durch den Sprecher und den exakten Zeitpunkt des Sprachkommandos.

Nachdem der zentrale Zugangs-Server die beteiligten Endgeräte identifiziert hat, kann dieser die gewünschten Inhalte an die einzelnen Endgeräte übermitteln, indem er beispielsweise an jeden einzelnen eine MMS mit den Inhalten oder eine SMS mit einem Link zu den Inhalten sendet. Auch ist es denkbar, dass dieser Gruppe eine eindeutige Nummer ggfs. sogar Telefonnummer mitgeteilt wird, die verwendet werden soll für den zukünftigen Informationaaustausch. Wenn Nachrichten an diese Nummer bzw. mit dieser Nummer im Text versendet werden. werden diese an die Mitglieder der Nutzergruppe weitergeleitet.

Die genaue Ausgestaltung, wie Inhalte oder Informationen zwischen den Teilnehmern der Ad-hoc-Nutzergruppe augetauscht werden, ist nicht Bestandteil dieses Verfahrens, vielmehr kann der Zugangs-Server die Informationen über die einzelnen Ad-hoc-Nutzergruppen einem beliebigen Dienste-Server zur Verfügung stellen, der spezifische Anwendungen bereitstellt.

Die weiteren Möglichkeiten, wie ein Dienste-Server die gewünschten Informationen bereitstellen könnte, sollen hier nur exemplarisch aufgezeigt werden:
- Der Dienste-Server verschickt an alle Teilnehmer die Kontaktdaten (übermittelte Rufnummer) oder versendet einen Link zu einer Webseite, unter der die Teilnehmer dann später die gewünschten Informationen eintragen und austauschen können.
- Der Dienste-Server verschickt oder nennt über Sprachausgabe eine spezifische Rufnummer an die die gewünschten Inhalte von einem oder mehreren Teilnehmern gesendet werden können, die dann automatisch an die anderen Teilnehmer weiterverteilt werden.
- Teilnehmer, die bereits beim zentralen Dienst angemeldet sind, können dort direkt ihre Inhalte hinterlegen und so per Sprachbefehl gezielt einzelne Inhalte auswählen, die dann an alle Teilnehmer der Ad-hoc-Nutzergruppe übertragen werden sollen (Beispiel: 'Sende meine Fotos von heute').

### Figurenbeschreibung:

Die Figuren, auf die im Folgenden detaillierter eingegangen wird, sind mögliche Ausgestaltungen der Erfindung. Sie sollen nicht limitierend betrachtet werden, sondern sind eine Auswahl einer Vielzahl von Möglichkeiten.
- Fig 1.: zeigt die prinzipielle Wirkungsweise des Verfahrens mit zwei unterschiedlichen Ad-hoc-Nutzergruppen und dem zentralen Zugangs-Server;
- Fig. 2: zeigt das Blockschaltbild des beschriebenen Verfahrens, wie es im Zugangs-Server zur Anwendung kommt.

Detaillierte Beschreibung einer möglichen Ausführungsform:

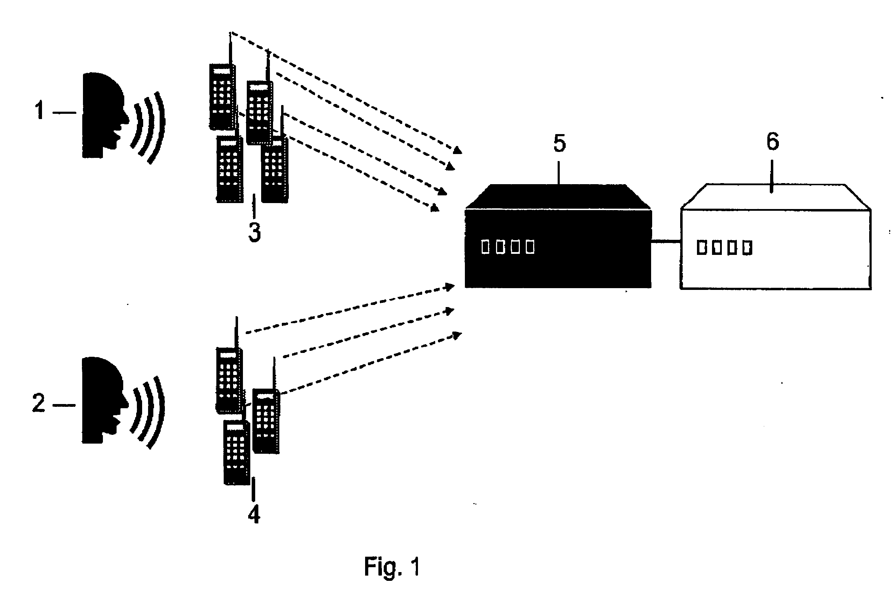

In Fig. 1 ist die prinzipielle Wirkungsweise des Verfahrens mit zwei unterschiedlichen Ad-hoa-Nutzergruppen (3, 4) und dem zentralen Zugangs-Server (5) zur Identifizierung der jeweiligen Mitglieder der Ad-hoc-Nutzergruppen dargestellt.

Alle Mobilfunkgeräte der Ad-hoc-Nutzergruppe (3) befinden sich in unmittelbarer örtlicher Nähe (liegen z.B. nebeneinander auf einem Tisch) und wurden zuvor mit dem zentralen Zugangs-Server (5) verbunden, indem auf allen Endgeräten eine einheitliche Service-Rufnummer gewählt wurde. Das Anwählen (Verbinden) mit dem Zugangs-Server kann dabei sowohl zeitgleich als auch nacheinander erfolgen, da die Nutzergruppenbildung erst einsetzt, wenn ein bestimmtes Schlüsselwort erkannt wird.

Ein Nutzer (1) initiiert nun stellvertretead für alle anderen Mitglieder der Nutzergruppe mittels einen Sprachkommandos die Ad-hoc-Nutzergruppe. Das hierfür zu verwendende Schlüsselwort ist abhängig vom konkreten Dienst und kann entweder lediglich die Identifizierung der Ad-hoc-Nutzergruppe einleiten (z.B. 'Neue Nutzergruppe!') oder auch gleichzeitig spezifische Aktionen definieren, die unter den Mitglieder der Ad-hoc-Nutzergruppe ausgeführt werden sollen (z.B. 'Adressdaten austauschen!').

In der Abbildung ist eine weitere Nutzergruppe (4) dargestellt, die zeitgleich den Dienst in Anspruch nimmt. Hier wird das Sprachkommando zur Initiierung der Ad-hoc-Nutzergruppe von einem vom Nutzer (1) verschiedenen Nutzer (2) (weil Teil der Nutzergruppe 4) gegeben.

Der Zugangs-Server (S) empfängt zunächst die Sprachsignale aller Mobilfunkgeräte, ohne deren Zuordnung zu den einzelnen Nutzergruppen zu kennen. Der Zugangs-Server analysiert nun die Sprachsignale mittels eines integrierten Spracherkenners hinsichtlich gegebenem Sprachkommando und exaktem Zeitpunkt des Eintreffen des Sprachsignals. Mobiltunkgeräte, deren Sprachsignal identisch ist, in Bezug auf Sprachkommando und Zeitpunkt des Sprachkommandos, gehören damit offensichtlich zu einer gemeinsamen Ad-hoc-Nutzergruppe, da selbst bei einer Nutzung des Dienstes durch zahlreiche unterschiedliche Nutzergruppen davon ausgegangen werden kann, dass sich die Sprachsignale der einzelnen Nutzergruppen voneinander in jedem Fall durch den exakten Zeitpunkt des Eintreffens das Sprachsignals oder weiterer Charakteristika des Sprachsignals unterscheiden.

Nachdem der Zugangs-Server (5) die Mitglieder einer Ad-hoc-Nutzergruppe durch Analyse der übermittelten Sprachsignale identifiziert hat, wird diese Information an den eigentlichen Dienste-Server (6) weitergeleitet, der die gewünschte spezifische Applikation für die Ad-hoc-Nutzergruppe bereitstellt und beispielsweise die gewünschten Inhalte an die Mitglieder der Nutzergruppe verteilt.

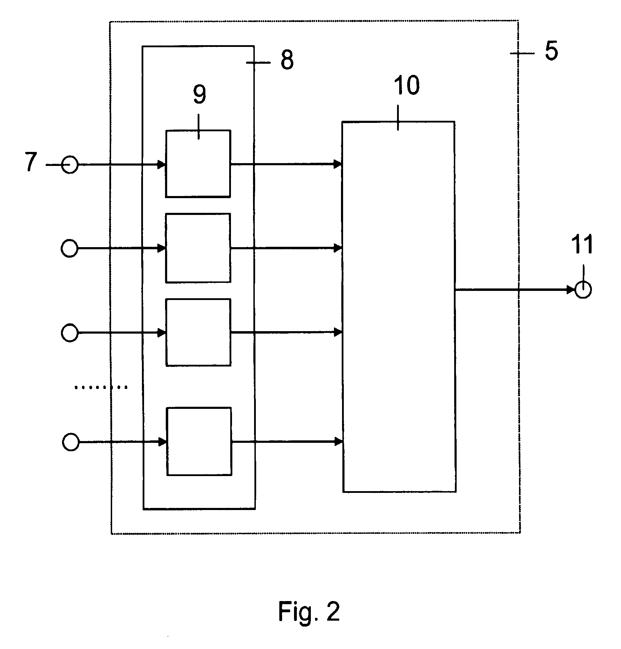

In Fig. 2 ist das Blockschaltbild des beschriebenen Verfahrens dargestellt, wie es im Zugangs-Server (5) zur Anwendung kommt.

Der Zugangsserver stellt für die einkommenden Anrufe eine entsprechende Anzahl von Ports (7) bereit, die die Anrufe der

Mobilfunkgeräte annehmen. Diese Ports sind an ein Sprachdialogsystem (8) mit integrierten Spracherkennungekanälen (9) angeschlossen. Das Sprachdialogsystem verwendet dabei für alle Ports eine identische und für die gewünschte Applikation spezifische Sprachgrammatik zur Erkennung des Sprachsignals.

Die entsprechenden möglichen Sprachkommandod sind dabei als Schlüsselwörter im Spracherkenner (ASR) hinterlegt, so dass die ASR für jeden Kanal bei erkanntem Schlüsselwort das zugehörige Sprachkommando mitsamt Zeitätempel als Ergebnis zurückliefert.

Die Analyse-Einheit (10) vergleicht nun alle innerhalb eines engen Zeitfensters td eingehenden Sprachergebnisse miteinander. Das Zeitfenster td beträgt dabei nur wenige Millisekunden.

Der Ablauf ist wie folgt:
1. Sobald das Erkennungmergebnie eines Sprachkanals vorliegt und noch keine Ad-hoc-Nutzergruppen existieren, wird eine neue Ad-hoc-Nutzergruppe gebildet.
2. Alle weiteren Erkennungsergebnisse von anderen Ports innerhalb des Zeitfensters td werden mit dem in Schritt 1 vorliegendem Erkennungsergebnis verglichen.
3. Sind die erkannten Sprachbefehle gleich, werden die zugehörigen Ports der Ad-hoc-Nutzergruppe aus Schritt 1 zugeordnet.
4. Sind die erkannten Sprachbefehle unterschiedlich, wird gemäß Schritt 1 eine neue Ad-hoc-Nutzergruppe gebildet und alle weiteren eingehenden Erkennungsergebnisse werden innerhalb des Zeitfensters td ebenfalls mit dieser Ad-hoc-Nutzergruppe verglichen.
5. Die endgültigen Ad-hoc-Nutzergruppen liegen jeweils nach der Zeitspanne td vor, nachdem das erste Mitglied der Ad-hoc-Nutzergruppe erzeugt wurde.
6. Die Ports der einzelnen endgültigen Ad-hoc-Nutzergruppen (und die damit verbundenen Mobilfunkgeräte bzw. deren Rufnummer zur Identifizierung) werden schließlich über eine Schnittstelle (11) an den Dienste-Server (6) übergeben. Die Ad-hoc-Nutzergruppe wird damit aus dem hier beschriebenen Algorithmus entfernt, d.h. weitere eingehende Erkennungsergebnisse können nicht mehr dieser Ad-hoc-Nutzergruppe zugeordnet werden.

### Erweiterungen:

Bei großen zu erwarteten Nutzerzahlen auf dem Zugangs-Server kann als algorithmische Erweiterung auch die Information der verwendeten Funkzelle, in der sich die jeweiligen Mobilfunkgeräte befinden, in der Analyse-Binheit berücksichtigt werden. Dann können nur Teilnehmer, die sich in direkt überlappenden Funkzellen befinden, eine gemeinsame Ad-hoc-Nutzergruppe bilden. Andernfalls werden weitere Ad-hoc-Nutzergruppen gebildet.

Ale weitere Ausbaustufe können auch bekannte Verfahren zur Sprecherverifizierung eingenetzt werden, die das Sprachsignal anhand unterschiedlicher sprechertypischer Sprachcharakteristika untersuchen, um so sicherzustellen, dass nur Sprachbefehle von ein und demselben Sprecher einer gemeinsamen Ad-hoc-Nutzergruppe zugeordnet werden.

Auf dem mobilen Endgerät kann eine spezielle Client-Software inutalliert werden, die die Anwahl einer zentralen Service-Rufnummer überflüssig macht und das Sprachsignal über eine Datenverbindung an den Zugangs-Server übermittelt. Da der Client-Software prinzipiell der Zugriff auf die lokal gespeicherten Inhalte des mobilen Endgerätes ermöglicht werden kann, ist es denkbar, dass der Anwender bereits über den Sprachbefehl bestimmte Inhalte benennt, die dann automatisch über die Client-Software an den Dienste-Server übertragen und von dort an die übrigen Teilnehmer weiterverteilt werden können.

## Patentansprüche

1. Verfahren zum Bestimmen einer Ad-hoc Nutzergruppe (3, 4), deren Mitglieder (1, 2) jeweils mindestens ein mobile Endgerät mit Spracheingabemitteln zur Kommunikation verwenden, umfassend die Schritte:
- jeweiliger Verbindungsaufbau aller mobilen Endgeräte, die Mitglied (1, 2) der Ad-hoc Nutzergruppe werden wollen, zu einem zentralen Server (5);
- gleichzeitige Eingabe einer Sprachnachricht in alle mobilen Endgeräte, die sich in unmittelbarer örtlicher Nähe befinden, über die Spracheingabemittel, um die Sprachnachricht jeweils an den zentralen Server (3) zu übertragen, zum Initiieren der Nutzergruppe;
- Durchführen einer Analyse der übermittelten Sprachnachrichten durch den zentralen Server (5), um Übereinstimmung bei den jeweils übermittelten Sprachnachrichten zu bestimmen und wenn eine Übereinstimmung festgestellt wurde, Zuordnung der mobilen Endgeräte von denen Übereinstimmende Sprachnachrichten empfangen wurden zu einer Ad-hoc-Nutzergruppe (3, 4) und übermitteln einer Gruppenkennung an diese mobilen Endgeräte.

2. Das Verfahren nach dem vorhergehenden Anspruch, wobei for den jeweiligen Verbindungsaufbau alle mobilen Endgeräte eine zentrale Service-Nummer des zentralen Servers (5) wählen.

3. Das Verfahren nach einem oder mehreren der vorhergehenden Ansprüche, wobei der zentrale Server (5) ein Sprachdislogsystem (8) verwendet, das vorzugsweise mit einer automatischen Spracherkennung und/oder Sprechererkennung arbeitet, um Übereinstimmungen bei den mobilen Endgeräten zu bestimmen.

4. Das Verfahren nach einem oder mehreren der vorhergehenden Ansprüche, wobei Überstimmungen beim Zeitpunkt des Sprachkommande bei der Bestimmung einer Ad-Hoc-Nutzergruppe (3, 4) berücksichtigt werden.

5. Das Verfahren nach einem oder mehreren der vorhergehenden Ansprüche wobei, nachdem der zentrale Server (5) die beteiligten mobilen Endgeräte identifiziert hat, er an die einzelnen mobilen Engeräte Informtionen, die einem Austausch von Informationen mit den mobilen Endgeräten der Ad-hoc Nutzergruppe (3, 4) erlauben, übermittelt.

6. Das Verfahren nach dem vorhergehenden Anspruch, wobei an jedes mobile Endgerät eine MMS/SMS mit Informationen übermittelt wird.

7. Server (3) zum Bestimmen einer Ad-hoc Nutzergruppe (4), deren Mitglieder jeweils mindestens ein mobiles Endgerät mit Spracheingabemitteln zur Kommunikation verwenden, umfassend
- eine Schnittstelle (7) für die Kommunikation mit den mobilen Endgeräten, die einen jeweiligen Verbindungsaufbau aller mobilen Endgeräte erlaubt;
- Sprachempfangseinheit (7, 8, 9) zum Empfangen jeweils derselben Sprachnachricht von jedem mobilen Endgerät, das als Mitglied einer Ad-hoc Nutzergruppe (3, 4) angehört, wobei die Sprachnachricht in die mobilen Endgeräte, die in räumlicher Nähe sind, gleichzeitig eingsgeben wurde;
- Verarbeitungseinheit (10) zum Analysieren der empfangenen Sprachnachrichten durch den Server (5), um Übereinstimmung bei den jeweils übermittelten Sprachnachrichten zu bestimmen, und wenn eine Übereinstimmung festgestellt wurde, Zuordnung der mobilen Endgeräte von denen Übereinstimmende Sprachnachrichten empfangen wurden zu einer Ad-hoc-Nutzengruppe (3, 4) und übermitteln einer Gruppenkennung an diese mobilen Endgeräte.

8. Server (5) nach dem vorhergehenden serveranspruch, wobei eine zentrale Service-Nummer zum Kontaktioren des Servers (5) bereitgestellt wird.

9. Server (5) nach einem oder mehreren der vovhergehenden Serveranspruche, wobei ein Sprachdialogaysystem (8) vorhanden ist, das vorzugsweise mit einer automatischen Spracherkennung (8) und/oder Sprechererkennung arbeitet, um Übereinstimmungen bei der Eingabe der mobilen Endgeräte zu bestimmen.

10. Server (5) nach einem oder mehreren der vorhergehenden Serveransprüche, wobei Übereinstimmungen bein zeitpunkt des Sprachkommandes bei der Bestimmung einer Ad-Boc-Nutzergruppe (3, 4) berückeichtigt werden.

11. Server (5) nach einem oder mehreren der vorhergehenden Serveransprüche, wobei, nach dem der Server (5) die beteiligten mobilen Endgeräten identifisiert hat, dieser eine Übermittlungseinheit aufweist, die den einselnen mobilen Endgeräten Informationen übermittelt, die einen Austausch von Informationen mit den mobilen Endgeräten der Ad-hoc Nutzergruppe (3, 4) erlauben.

12. Server (5) nach dem vorhergehenden Serveranspruch, wobei die übermittlungseinheit an jedes mobile Endgerät eine MMS/SMS mit Informationen übermittelt.

## Claims

1. A method for determining an ad hoc user group (3.4), whose members (1, 2) use at least one mobile devices with voice input means for communication, comprising the steps of:
- respective connection establishment to a central server (5) of all mobile devices, which want to become members (1.2) of the ad hoc group, ;
- Simultaneous input of a voice message to all mobile devices which are located in close proximity Into the voice input means, for transmitting each of the voice message to the central server (5), to initiate the user group;
- Performing an analysis of the transmitted voice messages through the central server (5) to determine similarities with the given transmitted voice messages, and if a match has been determined, assignment of the mobile terminals, from which the matching voice messages have been received, to an ad-hoc group (3,4) and transmitting a user group ID to these mobile devices

2. The method according to the preceding claim, wherein for the respective connection establishment all mobile devices dial a central service number of the central server (5).

3. The method according to one or more of the preceding claims, wherein the central server (5) uses a voice dialogue system (8), which preferably operates with an automatic speech recognition and / or speaker recognition, in order to determine similarities among the mobile devices.

4. The method according to one or more of the preceding claims, wherein similarities in the timing of voice commands are considered in the determination of an ad hoc user group (3.4) .

5. The method according to one or more of the preceding claims, wherein, after the central server (5) has identified the participating mobile terminals, it transmits to the individual terminals information, which allow an exchange of information with the mobile terminals of the ad hoc user group (3,4 ).

6. The method according to the preceding claim, wherein to each mobile terminal an MMS / SMS sent with information is transmitted.

7. Server (5) for determining an ad hoc user group (4), whose members use at least one mobile device with voice input means for communication, comprising
- An interface (7) for the communication with the mobile devices, that allows a respective connection of all mobile devices:
- A Voice reception unit (7,8,9) to receive the same respective voice message from any mobile device that Is a member of an ad hoc user group, wherein the voice message inputted into the mobile devices that are in close proximity, was entered at the same time;
- A Processing unit (10) to analyze the received voice messages through the server (5) to determine similarities with the given via voice messages, and If a match is found, assignment of the mobile devices from which matching voice messages are received, to an ad-hoc user-group (3.4) and submit a group ID on these mobile devices.

8. Server (5) according the previous server claim, wherein a central service number for contacting the server is deployed.

9. Server (5) according one or more of the preceding server claims, wherein a voice dialog system (8) is available that preferably works with automatic speech recognition (9) and / or speaker recognition, in order to determine similarities in the input of the mobile devices.

10. Server (5) according one or more of the preceding server claims, wherein similarities in the timing of voice commands in the determination of an ad hoc user group (3,4) are taken into account.

11. Server (5) according one or more of the preceding server claims, wherein after the server (5) has identified the participating mobile terminals, comprising a transfer unit, which transfers information to the individual mobile devices, which allow the exchange of information with the mobile devices of the ad Hoc users group (3.4).

12. Server (5) according the previous server claim, wherein the transmission unit transmits to each mobile terminal an MMS / SMS with the information.

## Revendications

1. Une méthode de détermination d'un groupe d'utilisateurs ad-hoc (3.4), dont les membres (1, 2) utilisent au moins un terminal mobile ayant des moyens de capture vocale pour transmission à distance, comprenant les étapes:
- l'établissement de connexions respectives à un serveur central (5) de tous les terminaux mobiles, souhaitant devenir des membres (1, 2) du groupe ad hoc;
- la capture simultanée d'un message vocal pour tous les terminaux mobiles qui sont localisés à une proche distance des moyens de capture vocale, pour la transmission de chacun des messages vocaux au serveur central (5), pour l'initialisation du groupe d'utilisateurs;
- l'analyse des messages vocaux transmis au travers du serveur central (5) pour déterminer des similitudes avec les messages vocaux transmis donnés, et lors de la détermination d'une correspondance, l'assignation des terminaux mobiles, à partir desquels les messages vocaux en correspondance ont été reçus, à un groupe d'utilisateurs ad hoc (3, 4) et la transmission d'un identifiant ID de groupe ad hoc à ces terminaux mobiles.

2. La méthode selon la revendication précédente, dans laquelle pour l'établissement des connexions respectives, tous les terminaux mobiles numérotent un numéro de service central du serveur central (5).

3. La méthode selon l'une ou plusieurs des revendications précédentes, dans laquelle le serveur central (5) utilise un système de dialogue vocal (8) qui, de préférence, opère au moyen d'une reconnaissance automatique de la voix et/ou de son utilisateur, dans le but de déterminer des similitudes parmi les terminaux mobiles.

4. La méthode selon l'une ou plusieurs des revendications précédentes, dans laquelle l'on considère les similitudes dans le déroulement temporel des commandes vocales pour la détermination du groupe d'utilisateurs ad hoc (3, 4).

5. La méthode selon l'une ou plusieurs des revendications précédentes, dans laquelle, après l'identification par le serveur central (5) des terminaux mobiles participants, le serveur central (5) transmet de l'information aux terminaux mobiles, permettant un échange d'information avec les terminaux mobiles du groupe ad hoc d'utilisateurs (3, 4).

6. La méthode selon la revendication précédente, dans laquelle est transmise à chaque terminal mobile un MMS/SMS comportant de l'information.

7. Un serveur pour la détermination d'un groupe d'utilisateurs ad hoc (3, 4), dont les membres utilisent au moins un dispositif mobile ayant des moyens de capture vocale pour transmission à distance, comprenant:
- une interface (7) pour la communication avec les terminaux mobiles, permettant une connexion respective à tous les terminaux mobiles;
- une unité de réception vocale (7, 8, 9) pour la réception des mêmes messages vocaux respectifs d'un dispositif mobile quelconque qui est membre d'un groupe d'utilisateurs ad hoc, dans laquelle les messages vocaux capturés au sein des terminaux mobiles localisés à une proche distance, sont capturés au même instant;
- une unité de traitement (10) pour l'analyse des messages vocaux reçus au travers le serveur (5) pour déterminer des similitudes avec des messages vocaux donnés, et lors de la détermination d'une correspondance, l'assignation des terminaux mobiles, à partir desquels les messages vocaux en correspondance ont été reçus, à un groupe d'utilisateurs ad hoc (3, 4) et la transmission d'un identifiant de groupe ID à ces terminaux mobiles.

8. Serveur (5) selon la revendication précédente, dans lequel est déployé un numéro de service central pour l'appel du serveur.

9. Serveur (5) selon l'une quelconque des revendications de serveur précédentes, dans lequel un système de dialogue vocal (8) est disponible opérant de préférence au moyen d'une reconnaissance automatique de la parole (9) et/ou de l'utilisateur, dans le but de déterminer des similitudes dans la saisie des terminaux mobiles.

10. Serveur (5) selon l'une ou plusieurs des revendications de serveur précédentes, dans lequel des similitudes dans le déroulement temporel de commandes vocales sont prises en compte pour la détermination d'un groupe d'utilisateurs (3, 4) ad hoc.

11. Serveur (5) selon l'une ou plusieurs des revendications de serveur précédentes, dans lequel, après l'identification par le serveur (5) des terminaux mobiles participants, comprenant une unité de transfert, transférant de l'information à tous les terminaux mobiles individuels, permet l'échange d'informations avec les terminaux mobiles du groupe d'utilisateurs ad hoc (3,4).

12. Serveur (5) selon la revendication de serveur précédente, dans lequel l'unité de transmission transmet à chaque terminal mobile un MMS/SMS comportant de l'information.
